# EUROPEAN PATENT APPLICATION

(11) **EP 4 697 587 A1**
(43) Date of publication of application: **18.02.2026**
(21) Application number: 24223104.1
(22) Date of filing: 23.12.2024
(51) Int. Cl.: H02S 20/00, H02S 40/10, H02S 40/12

(54) **PHOTOVOLTAIC FRAME AND PHOTOVOLTAIC MODULE**

(30) Priority: 14.08.2024 CN 202411116855
(71) Applicant: JINKO SOLAR CO., LTD, Shangrao Jiangxi 334100 (CN); Jinko Solar (Haining) Co., Ltd., Haining City, Zhejiang 314415 (CN)
(72) Inventor: TAO, Wusong, Shangrao, Jiangxi (CN); XIE, Yunfei, Shangrao, Jiangxi (CN); SHI, Jiahui, Shangrao, Jiangxi (CN); PENG, Changchun, Shangrao, Jiangxi (CN); SHI, Tiantian, Shangrao, Jiangxi (CN)
(74) Representative: Balder IP Law, S.L.

(57) **Abstract**

Provided is a photovoltaic frame including a carrying portion, a first limiting portion and a second limiting portion. A top of the carrying portion is configured to place a laminate. The first limiting portion is disposed on the carrying portion, and has a bottom connected to the carrying portion. The second limiting portion is disposed above the carrying portion and has an end connected to a top of the first limiting portion. A top surface of the second limiting portion includes a curved surface having a first end point and a second end point. A tangent line of the first end point at the curved surface is at a first included angle to a plane, a tangent line of the second end point at the curved surface is at a second included angle to the plane, and the first included angle is greater than the second included angle.

## Description

### TECHNICAL FIELD

Embodiments of the present disclosure relate to the field of photovoltaic modules, and in particular, to a photovoltaic frame and a photovoltaic module.

### BACKGROUND

With the rapid development of solar energy technology and the expanding fields of application of the solar energy technology in the economy and society, how to realize the balance of power generation benefit and cost has become the key to the development of the industry. As one of packaging structures of a photovoltaic module, a frame should be implemented with differentiated functions for different application locations.

As the solar photovoltaic module is always in outdoor working environment and suffered from rain, snow, sand and dust, and other harsh environment, especially in the rainy and snowy coastal areas or sandy and dusty western regions, the photovoltaic module is prone to accumulation of rainwater or sand and dust at the bottom position on the front side of the photovoltaic module, which affects the service life of the photovoltaic module.

### SUMMARY

Embodiments of the present disclosure provide a photovoltaic frame and a photovoltaic module, at least facilitating improving the service life of the photovoltaic module is facilitated.

According to some embodiments of the present disclosure, the present disclosure provides a photovoltaic frame. The photovoltaic frame includes a carrying portion, a first limiting portion and a second limiting portion. A top of the carrying portion is configured to place a laminate. The first limiting portion is disposed on the carrying portion, and a bottom of the first limiting portion is connected to the carrying portion. The second limiting portion is disposed above the carrying portion, one end of the second limiting portion is connected to a top of the first limiting portion, and a top surface of the second limiting portion includes a curved surface recessed toward the carrying portion. The curved surface includes a first end point on a side of the curved surface adjacent to the first limiting portion and a second end point on a side of the curved surface away from the first limiting portion. A tangent line of the first end point at the curved surface is at a first included angle to a plane where a top surface of the carrying portion is located, a tangent line of the second end point at the curved surface is at a second included angle to the plane where the top surface of the carrying portion is located, and the first included angle is greater than the second included angle.

In some embodiments, the first included angle is 30° to 90°, and the second included angle is 0° to 30°.

In some embodiments, the top surface of the second limiting portion further includes a corrugated surface disposed on a side of the curved surface adjacent to the first limiting portion.

In some embodiments, a difference between the first included angle and the second included angle is 40° to 90°.

In some embodiments, the first included angle is 60° to 90°, and the second included angle is 0° to 20°.

In some embodiments, the carrying portion includes a first side portion, a bottom portion, a second side portion, and a top portion sequentially connected, and the first side portion, the bottom portion, the second side portion, and the top portion encloses a corner connector cavity configured to accommodate a corner connector to connect two adjacent photovoltaic frames.

In some embodiments, a width of the bottom portion is larger than a width of the top portion in a direction perpendicular to a surface of the first side portion.

In some embodiments, a width of the top portion is greater than a distance between the first side portion and the second side portion in a direction perpendicular to a surface of the first side portion.

In some embodiments, in a direction perpendicular to a surface of the first limiting portion, a width of the second limiting portion is greater than or equal to 1/2 of a width of the top of the carrying portion and less than or equal to the width of the top of the carrying portion.

In some embodiments, a surface of the second limiting portion facing the carrying portion is provided with an overflow groove configured to accommodate a part of silicone gel filled between a photovoltaic frame and the laminate.

According to some embodiments of the present disclosure, the present disclosure provides a photovoltaic module. The photovoltaic module includes a laminate and a frame. The laminate includes two opposing first edges and two opposing second edges, where each of the two opposing first edges is parallel to a horizontal plane, and each of the two opposing second edges is at a predetermined included angle to the horizontal plane. The frame is the photovoltaic frame in any one of the above embodiments, and located on one of the two opposing first edges closer to the horizontal plane.

In some embodiments, the predetermined included angle is greater than or equal to the first included angle.

In some embodiments, the laminate includes cells, a first encapsulation layer disposed on a top surface of each of the cells, and a second encapsulation layer disposed on a bottom surface of each of the cell. An area of each of the first encapsulation layer and the second encapsulation layer is larger than an area of the cells, and the first encapsulation layer and the second encapsulation layer are disposed between the first limiting portion and the carrying portion. In a direction perpendicular to a surface of the first encapsulation layer, a top surface of an end of the second limiting portion adjacent to the first limiting portion has a first vertex furthest away from the surface of the first encapsulation layer, a top surface of an end of the second limiting portion away from the first limiting portion has a second vertex furthest away from the surface of the first encapsulation layer, and a ratio of a first distance between the first vertex and a top surface of the laminate to a second distance between the second vertex and the top surface of the laminate is 3 to 3.5.

In some embodiments, the first distance is less than or equal to 4 mm, and the second distance is less than or equal to 1.2 mm.

In some embodiments, the predetermined included angle is greater than or equal to an included angle between the surface of the first encapsulation layer and a line connecting the first vertex to the second vertex.

### BRIEF DESCRIPTION OF THE DRAWINGS

One or more embodiments are exemplarily described with reference to the corresponding figures in the accompanying drawings, and the descriptions are not to be construed as limiting the embodiments. Unless otherwise particularly stated, the figures in the accompanying drawings are not drawn to scale. To describe the technical solutions in the embodiments of the present disclosure or in the conventional technologies more clearly, the following briefly introduces the accompanying drawings required for describing the embodiments. Apparently, the accompanying drawings in the following description show merely some embodiments of the present disclosure, and a person of ordinary skill in the art may still derive other accompanying drawings from these accompanying drawings without creative efforts.
FIGS. 1 to 5 are schematic structure views of various photovoltaic frames according to embodiments of the present disclosure.
FIG. 6 is a schematic structure view illustrating the overall structure of a photovoltaic module according to an embodiment of the present disclosure.
FIG. 7 is a sectional view of the photovoltaic module in FIG. 6 taken along line SS1.
FIGS. 8 and 9 are schematic locally enlarged views of various photovoltaic modules according to embodiments of the present disclosure.

### DETAILED DESCRIPTION OF THE EMBODIMENTS

It is known from the BACKGROUND part that the photovoltaic module is prone to accumulation of rainwater or sand and dust at the bottom position on the front side of the photovoltaic module, which affects the service life of the photovoltaic module.

The photovoltaic module is usually installed at a certain angle to the ground, so that most of the water on the front side of the photovoltaic module can flow out smoothly, but for the rainy and snowy coastal areas or sandy and dusty western regions, water and dust are accumulated on the inner wall of the photovoltaic frame for a long time. The power generation, aging performance and service life of the photovoltaic module in such condition for a long time are adversely affected, and in the case of more dust, the blocked cell is prone to forming hot spots, which in serious cases may easily cause fires, resulting in huge economic losses.

In the photovoltaic frame and photovoltaic module in the present disclosure are, at least improving the service life of the photovoltaic module is facilitated.

In the description of the embodiments of the present disclosure, the technical terms "first" "second" and the like are only used to distinguish different objects and cannot be understood as indicating or implying relative importance or implicitly indicating the number, specific order, or primary and secondary relationship of the indicated technical features. In the description of the embodiments of the present disclosure, "a plurality of' means at least two, unless otherwise specified.

Reference herein to "embodiment" means that a particular feature, structure, or characteristic described in connection with the embodiment may be included in at least one embodiment of the present disclosure. The appearances of this phrase in various places in the specification are not necessarily all referring to the same embodiment, nor are separate or alternative embodiments that are mutually exclusive with other embodiments. It is explicitly and implicitly understood by those skilled in the art that the embodiments described herein may be combined with other embodiments.

In the description of the embodiments of the present disclosure, orientation or positional relationship indicated by technical terms "center", "transverse", "longitudinal", "length", "width", "thickness", "up", "down", "front", "rear", "left", "right", "vertical", "horizontal", "top", "bottom", "inside" "outside", "clockwise", "counterclockwise", "axial", "radial", "circumferential" and the like are orientations or positional relationships based on those shown in the accompanying drawings, which are intended only to facilitate the description of embodiments of the present disclosure and to simplify the description, and are not intended to indicate or imply that the device or element referred to must have a particular orientation, be constructed and operated with a particular orientation, and therefore are not to be construed as a limitation of the embodiments of the present disclosure.

In the description of the embodiments of the present disclosure, unless otherwise specified and limited, technical terms "mounted", "connected", "connecting", "fixed", etc. are to be understood in a broad sense. For example, it may be a fixed connection, a removable connection, or a one-piece connection, it may be a mechanical connection, or an electrical connection, it may be a direct connection, or an indirect connection through an intermediate medium, and it may be a connection between two elements or an interaction between the two elements. For those of ordinary skill in the art, specific meanings of the above terms in the embodiments of the present disclosure may be understood according to specific situations.

In the accompanying drawings corresponding to the embodiments of the present disclosure, for better understanding and ease of description, the thickness and area of a layer are enlarged. When a component (e.g., a layer, a film, a region, or a substrate) is described as being formed over another component or over a surface of another component, the component may be "directly" on the surface of another component, or a third component may exist between the two components. In contrast, when a component is described as being formed on a surface of another component or a surface of a component is formed or provided with another component, there is no third component between the two components. In addition, when a component is described as being "substantially" formed on/over another component, it means that the component is not formed on/over the entire surface (or front surface) of another component, nor on/over a portion of the edge of the entire surface.

In the description of the embodiments of the present disclosure, when a component "includes" another component, unless otherwise stated, other components are not excluded, and other components may be further included in the component. In addition, when a component such as a layer, a film, a region, or a plate is referred to as being "over/disposed above" another component, it may be "directly on" another component (i.e., being on the surface of another component and there is no other component therebetween), or another component may exist therebetween. Furthermore, when a component such as a layer, film, region, plate, etc. is "directly on" another component, or when a component such as a layer, film, region, plate, etc. is disposed on the surface of another component, it means that no other component is disposed therebetween.

The following describes the embodiments of the present disclosure in detail with reference to the accompanying drawings. However, a person of ordinary skill in the art may understand that in the embodiments of the present disclosure, many technical details are provided to make readers better understand the embodiments of the present disclosure. However, even without these technical details and various changes and modifications based on the following embodiments, the technical solutions claimed in the embodiments of the present disclosure can be implemented.

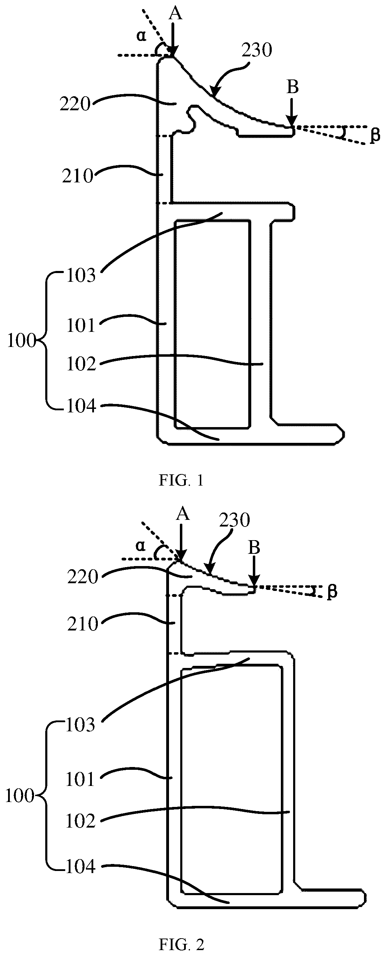

FIGS. 1 to 5 are schematic structure views of various photovoltaic frames according to embodiments of the present disclosure.

Referring to FIGS. 1 to 5, according to some embodiments of the present disclosure, a photovoltaic frame is provided. The photovoltaic frame includes a carrying portion 100, a first limiting portion 210, and a second limiting portion 220. A top of the carrying portion 100 is configured to place a laminate (not shown). The first limiting portion 210 is disposed on the carrying portion 100, and a bottom of the first limiting portion 210 is connected to the carrying portion 100. The second limiting portion 220 is disposed above the carrying portion 100, one end of the second limiting portion 220 is connected to a top of the first limiting portion 210, and a top surface of the second limiting portion 220 includes a curved surface 230 recessed toward the carrying portion 100. The curved surface 230 includes a first end point A on a side of the curved surface 230 adjacent to the first limiting portion 210, and a second end point B on a side of the curved surface 230 away from the first limiting portion 210. A tangent line of the first end point A at the curved surface 230 is at a first included angle α to a plane where a top surface of the carrying portion 100 is located, and a tangent line of the second end point B at the curved surface 230 is at a second included angle β to the plane where the top surface of the carrying portion 100 is located. The first included angle α is greater than the second included angle β.

In the photovoltaic frame according to an embodiment of the present disclosure, the top of the carrying portion 100 is configured to place the laminate, the first limiting portion 210 is disposed on the carrying portion 100, and the bottom of the first limiting portion 210 is connected to the top of the carrying portion 100; the first limiting portion 210 is located on a side of the laminate when the laminate is placed on the top of the carrying portion 100, so as to restrict the movement of the laminate; the second limiting portion 220 is disposed above the carrying portion 100, and one end of the second limiting portion 220 is connected to the top of the first limiting portion 210, so that when the laminate is placed on the top of the carrying portion 100, the laminate is located in a slot enclosed by the carrying portion 100, the first limiting portion 210, and the second limiting portion 220, so as to avoid the problem of the laminate being detached from the photovoltaic frame.

The top surface of the second limiting portion 220 includes the curved surface 230 recessed toward the carrying portion 100, so that when the photovoltaic frame is mounted around the laminate, the curved surface 230, as the top surface of the photovoltaic frame, may be favorable to the sliding down of rain, snow, or sand and dust, thereby facilitating that the top surface of the photovoltaic frame is not prone to accumulate rain, snow, or sand and dust. In addition, the end point of the curved surface 230 adjacent to the first limiting portion 210 is the first end point A, the end point of the curved surface 230 away from the first limiting portion 210 is the second end point B, the tangent line of the first end point A at the curved surface 230 is at the first included angle α to the plane where the top surface of the carrying portion 100 is located, the tangent line of the second end point B at the curved surface 230 is at the second included angle β to the plane where the top surface of the carrying portion 100 is located, and the first included angle α is greater than the second included angle β, so that the accumulation of rain, snow, or sand and dust between an end surface of the second limiting portion 220 away from the first limiting portion 210 and a surface of the laminate can be avoided, preventing the formation of hot spots on the surface of the cell being blocked, and thus improving the service life of the photovoltaic module.

It is to be noted that in the accompanying drawings according to this embodiment, for ease of illustration, as an example, the first included angle α is the included angle between the tangent line of the first end point A at the curved surface 230 and a surface parallel to the top surface of the carrying portion 100, and the second included angle β is the included angle between the tangent line of the second end point B at the curved surface 230 and the surface parallel to the top surface of the carrying portion 100.

Referring to FIGS. 1 to 5, taking the surface parallel to the top surface of the carrying portion 100 as a reference surface, the first included angle α is located above the reference surface, and the second included angle β is located below the reference surface, so as to facilitate the smooth transition between the curved surface 230 and the surface of the laminate surface, and to avoid the end of the second limiting portion 220 away from the first limiting portion 210 from forming an angle with the surface of the laminate, thereby enabling the rain, snow, or sand and dust on the surface of the laminate to slide down the curved surface 230.

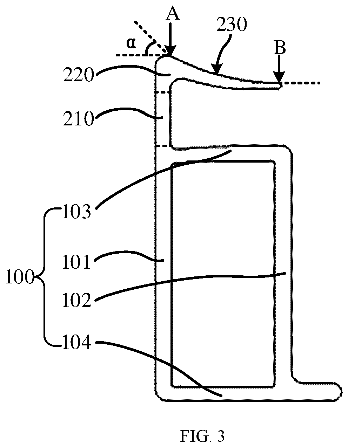

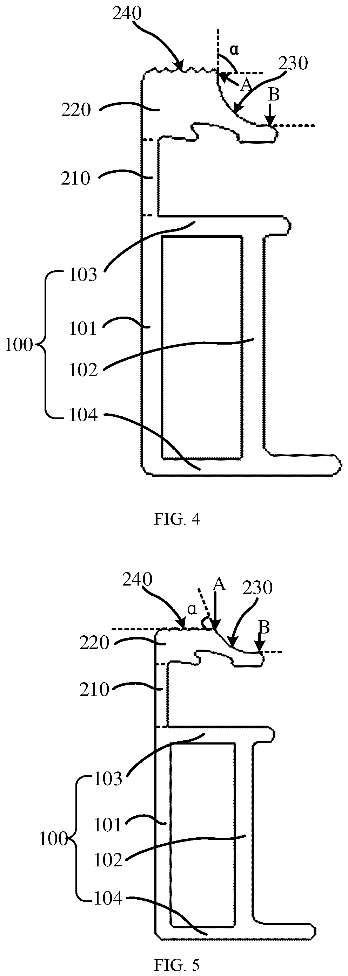

It should be noted that in FIG. 4, the first included angle α is 90°, i.e., the tangent line of the first end point A at the curved surface 230 is perpendicular to the reference surface; and in FIGS. 3, 4, and 5, the second included angle β is 0°, i.e., the tangent line of the second end point B at the curved surface 230 is parallel to the reference surface.

In some embodiments, the first included angle α may be 30° to 90°, for example, 30°, 35°, 41°, 47°, 55°, 62°, 70°, 84°, or 90°.

In some embodiments, the second included angle β may be 0° to 30°, for example, 0°, 4°, 8°, 15°, 19°, 22°, 26°, or 30°.

Referring to FIGS. 1 to 5, in some embodiments, the carrying portion 100 includes a first side portion 101, a bottom portion 104, a second side portion 102, and a top portion 103 sequentially connected. The first side portion 101, the bottom portion 104, the second side portion 102, and the top portion 103 encloses a corner connector cavity configured to accommodate a corner connector to connect two adjacent photovoltaic frames.

In some embodiments, a width of the bottom portion 104 is larger than a width of the top portion 103 in a direction perpendicular to a surface of the first side portion 101, so as to avoid the problem of tipping of the photovoltaic frame.

In some embodiments, referring to FIGS. 1, 4, and 5, the width of the top portion 103 may be greater than a distance between the first side portion 101 and the second side portion 102 in the direction perpendicular to the surface of the first side portion 101, so that, when the laminate is placed on the top of the carrying portion 100, the support area of the top portion 103 for the laminate is increased, and the problem of breaking of the laminate due to stress concentration can be avoided.

In some embodiments, referring to Figures 2 and 3, the width of the top portion 103 may also be equal to the distance between the first side portion 101 and the second side portion 102 in the direction perpendicular to the surface of the first side portion 101.

In some embodiments, in a direction perpendicular to a surface of the first limiting portion 210, a width of the second limiting portion 220 is greater than or equal to 1/2 of the width of the top of the carrying portion 100 (i.e., the width of the top portion 103), and less than or equal to the width of the top of the carrying portion 100. In this way, when the laminate is placed on the top of the carrying portion 100, the second limiting portion 220 is able to provide sufficient force to the laminate to avoid the problem of the laminate falling off from the photovoltaic frame; and at the same time, the second limiting portion 220 can also be avoided from blocking the surface of the laminate, and then from blocking the cell, improving the light conversion efficiency of the photovoltaic module.

Referring to FIGS. 1 to 5, in some embodiments, the surface of the second limiting portion 220 facing the carrying portion 100 may be provided with an overflow groove, and the overflow groove may accommodate a part of silicone gel filled between the photovoltaic frame and the laminate, so as to prevent the silicone gel from overflowing onto the surface of the laminate and blocking the cell.

It is understood that the shape of the overflow groove can be designed according to the overall shape of the actual photovoltaic frame, and the accompanying drawings according to this embodiment do not limit the shape of the overflow groove, as long as the overflow groove can satisfactorily accommodate the silica gel so as to avoid overflow of the silica gel to the surface of the laminate resulting in blocking of the cell.

In some embodiments, referring to FIGS. 1, 4, and 5, the top surface of the carrying portion 100 (i.e., the top surface of the top portion 103) may be parallel to the surface of the bottom portion 104. Alternatively, referring to FIGS. 2 and 3, the top surface of the carrying portion 100 (i.e., the top surface of the top portion 103) may have an inclined surface on a side of the carrying portion 100 adjacent to the first limiting portion 210. The inclined surface intersects the surface of the bottom portion 104, and can facilitate the filling of the silicone, thereby facilitating the improvement of the bonding strength between the laminate and the photovoltaic frame.

Referring to FIGS. 4 and 5, in some embodiments, the top surface of the second limiting portion 220 includes a corrugated surface 240, and in a direction parallel to the top surface of the carrying portion 100, the corrugated surface 240 is disposed on a side of the curved surface 230 adjacent to the first limiting portion 210. When a press block is provided on the photovoltaic frame, the corrugated surface 240 can increase the friction between the press block and the photovoltaic frame, improving the stability of the installation of the press block to the photovoltaic frame.

In some embodiments, when the top surface of the second limiting portion 220 is provided with the corrugated surface 240, a difference between the first included angle α and the second included angle β is 40° to 90°, for example, 40°, 45°, 49°, 56°, 67°, 76°, 82° or 90°. It should be understood that when the top surface of the second limiting portion 220 is provided with the corrugated surface 240, in the direction perpendicular to the surface of the first limiting portion 210, a region of the top surface of the second limiting portion 220 that can be used to provide the corrugated surface 230 has a reduced wide, and the difference between the first included angle α and the second included angle β is provided to be 40° and 90° so that the curved surface 230 is relatively smooth, so as to facilitate sliding down of rain, snow, or sand and dust on the surface of laminate surface to slide down the curved surface 230.

In some embodiments, when the top surface of the second limiting portion 220 is also provided with a corrugated surface 240, the first included angle α may be between 60° and 90°, such as 60°, 64°, 66°, 72°, 77°, 83°, 88°, or 90°.

In some embodiments, when the top surface of the second limiting portion 220 is provided with the corrugated surface 240, the second included angle β may be 0° to 20°, for example, 0°, 5°, 9°, 13°, 17°, or 20°.

In the photovoltaic frame according to the embodiments of the present disclosure, the top of the carrying portion 100 is configured to place the laminate, the first limiting portion 210 is located on the carrying portion 100, the bottom of the first limiting portion 210 is connected to the top of the carrying portion 100, and when the laminate is placed on the top of the carrying portion 100, the first limiting portion 210 is located on the side of the laminate, so as to restrict the movement of the laminate; the second limiting portion 220 is disposed above the carrying portion 100, and one end of the second limiting portion 220 is connected to the top of the first limiting portion 210, so that when the laminate is placed on the top of the carrying portion 100, the laminate is located in the slot enclosed by the carrying portion 100, the first limiting portion 210, and the second limiting portion 220, so as to avoid the problem of the laminate being detached from the photovoltaic frame.

The top surface of the second limiting portion 220 includes the curved surface 230 recessed toward the carrying portion 100, so that when the photovoltaic frame is mounted around the laminate, the curved surface 230, as the top surface of the photovoltaic frame, may be favorable to the sliding down of rain, snow, or sand and dust, thereby facilitating that the top surface of the photovoltaic frame is not prone to accumulate rain, snow, or sand and dust. In addition, the end point of the curved surface 230 adjacent to the first limiting portion 210 is the first end point A, the end point of the curved surface 230 away from the first limiting portion 210 is the second end point B, the tangent line of the first end point A at the curved surface 230 is at the first included angle α to the plane where the top surface of the carrying portion 100 is located, the tangent line of the second end point B at the curved surface 230 is at the second included angle β to the plane where the top surface of the carrying portion 100 is located, and the first included angle α is greater than the second included angle β, so that the accumulation of rain, snow, or sand and dust between the end surface of the second limiting portion 220 away from the first limiting portion 210 and the surface of the laminate can be avoided, preventing the formation of hot spots on the surface of the cell being blocked, and thus improving the service life of the photovoltaic module.

Accordingly, another embodiment of the present disclosure provides a photovoltaic module that is assembled using the photovoltaic frame in any of the above embodiments to improve the service life of the photovoltaic module. The photovoltaic module according to another embodiment of the present disclosure is described in detail hereinafter in conjunction with the accompanying drawings, and the same or corresponding parts as the previous embodiments can be referred to the corresponding descriptions of the previous embodiments, which will not be described in detail hereinafter.

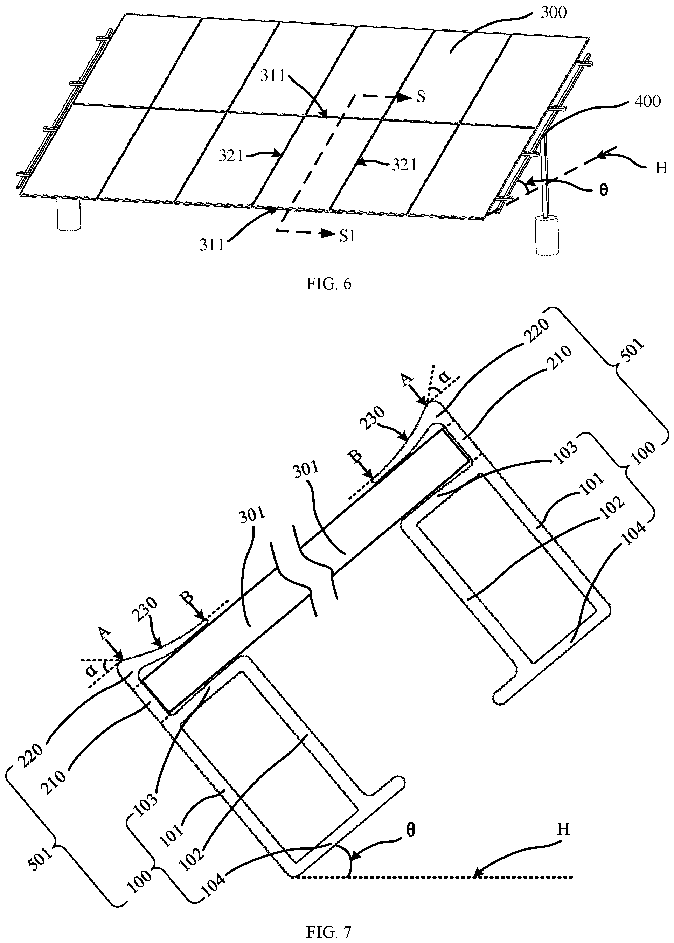

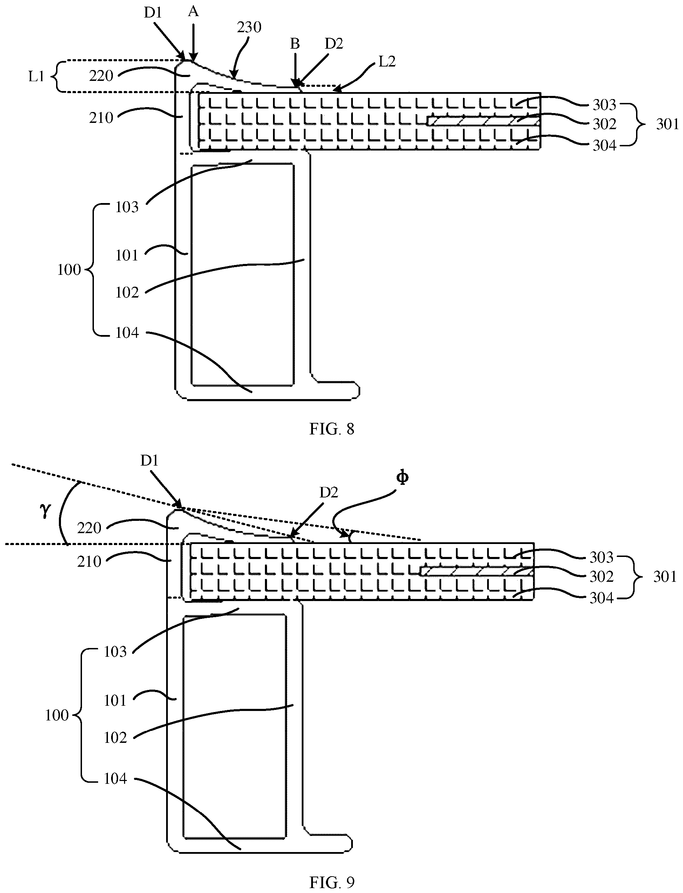

FIG. 6 is a schematic structure view illustrating the overall structure of a photovoltaic module according to an embodiment of the present disclosure. FIG. 7 is a sectional view of the photovoltaic module in FIG. 6 taken along line SS1. FIGS. 8 and 9 are schematic locally enlarged views of various photovoltaic modules according to embodiments of the present disclosure.

With reference to FIGS. 6 to 9, the photovoltaic module 300 includes a laminate 301 and a frame 501. The laminate 301 includes two opposing first edges 311 and two opposing second edges 321. Each first edge 311 is parallel to the horizontal plane H, and each second edge 321 is disposed at a preset included angle θ to the horizontal plane H. The frame 501 is any one of the photovoltaic frames in the above embodiments, and is located at the first side 311 of the laminate 301 closer to the horizontal plane H. That is to say, when the second side 321 of the photovoltaic module 300 is at a preset included angle θ to the horizontal plane H, the photovoltaic module 300 as a whole is inclined at the predetermined included angle θ with respect to the horizontal plane H, and at least the first side 311 of the laminate 301 closer to the horizontal plane H is provided with the photovoltaic frame in the above embodiments.

It is to be understood that when the photovoltaic module 300 as a whole is inclined at the predetermined included angle θ with respect to the horizontal plane H, the surface of the laminate 301 is also at the predetermined included angle θ with respect to the horizontal plane H. When rain, snow, or sand and dust falls on the surface of the laminate 301, due to the existence of the included angle, the rain, snow, or sand and dust will slide down to the bottom of the photovoltaic module 300, i.e., the first edge 311 of the laminate 301 closer to the horizontal plane H. Since the top surface of the frame 501 is provided with the curved surface 230, the rain, snow, or sand and dust will slide downwardly beyond the surface of the photovoltaic module 300, thereby avoiding the accumulation of rain, snow, or sand and dust on the surface of the photovoltaic module 300, so as to improve the service life of the photovoltaic module 300.

In some embodiments, the photovoltaic frame of the photovoltaic module 300 may be mounted and fixed to a bracket 400 to allow the photovoltaic module 300 as a whole to be inclined at the predetermined included angle θ with respect to the horizontal plane H.

It should be noted that in FIGS. 7 to 9, illustration is given taking the frame 501 being the photovoltaic frame shown in FIG. 3 as an example, which does not constitute a limitation of the frame 501. The frame 501 in the photovoltaic module 300 may be implemented as any one of the photovoltaic frames in the above-described embodiments.

In some embodiments, the frame 501 may also be provided on the first side 311 of the laminate 301 that is further away from the horizontal plane H. In some embodiments, a frame having other shapes may also be provided on the first side 311 of the laminate 301 that is further away from the horizontal plane H. This embodiment does not limit the photovoltaic frame on the first side 311 of the laminate 301 further away from the horizontal plane H.

In some embodiments, a frame 501 may be provided on a respective one of at least one second side of the two second sides 321 of the laminate 301. In some embodiments, a frame having other shapes may be provided on the two second sides 321 of the laminate 301. This embodiment does not limit the photovoltaic frame on the two second sides 321 of the laminate 301.

Referring to FIG. 7, in some embodiments, the preset included angle θ is greater than or equal to the first included angle α. That is to say, when the photovoltaic module 300 is inclined, the tangent line of the first end point A at the top surface (or the curved surface 230) of the photovoltaic module 300 is at least parallel to the horizontal plane H, so that the rain, snow, or sand and dust will not accumulate at the first end point A of the curved surface 230, which is conducive to the rain, snow, or sand and dust sliding down to the ground, so as to avoid that the accumulation of rain, snow, or sand and dust leads to blocking of the surface of the laminate 301.

Referring to FIG. 8, in some embodiments, the laminate 301 includes cells 302, a first encapsulation layer 303 disposed on a top surface of each of the cells 302, and a second encapsulation layer 304 disposed on a bottom surface of each of the cells 302. An area of each of the first encapsulation layer 303 and the second encapsulation layer 304 is larger than an area of the cells 302. The first encapsulation layer 303 and the second encapsulation layer 304 are disposed between the first limiting portion 210 and the carrying portion 100.

In a direction perpendicular to a surface of the first encapsulation layer 303, at a top surface of the second limiting portion 220 at an end of the second limiting portion 220 adjacent to first limiting portion 210, a point furthest away from the surface of the first encapsulation layer 303 is a first vertex D1; and at a top surface of the second limiting portion 220 at an end of the second limiting portion 220 away from first limiting portion 210, a point furthest away from the surface of the first encapsulation layer 303 is a second vertex D2. A distance between the first vertex D1 and a top surface of the laminate 301 (i.e., the surface of the first encapsulation layer 303) is a first distance L1, a distance between the second vertex D2 and the top surface of the laminate 301 is a second distance L2, and a ratio the first distance L1 to the second distance L2 is 3 to 3.5, for example, 3, 3.1, 3.2, 3.3, 3.4, or 3.5.

That is to say, in the direction perpendicular to the surface of the first encapsulation layer 303, a ratio of a height of the first vertex D1 of the second limiting portion 220 adjacent to the first limiting portion 210 with respect to the top surface of the first encapsulation layer 303 to a height of the second vertex D2 of the second limiting portion 220 away from the first limiting portion 210 with respect to the top surface of the first encapsulation layer 303 needs to be in an appropriate range, so as to facilitate a smoother transition of the curved surface 230, thereby facilitating the sliding down of rain, snow, or sand and dust.

In some embodiments, the first vertex D1 and the first end point A may be the same point or different points.

In some embodiments, the second vertex D2 and the second end point B may be the same point or different points.

In some embodiments, the first distance L1 is less than or equal to 4 mm, for example, 4 mm, 3.8 mm, 3.5 mm, 3.3 mm, 3 mm, 2.9 mm, 2.5 mm, 2.2 mm, 2 mm, 1.8 mm, 1.6 mm, 1.3 mm, or 1.2 mm.

In some embodiments, the second distance L2 is less than or equal to 1.2 mm, for example, 1.2 mm, 1.1 mm, 1 mm, 0.8 mm, 0.7 mm, or 0.5 mm.

With reference to FIGS. 7 and 9, in some embodiments, the predetermined included angle θ is greater than or equal to an included angle γ between the surface of the first encapsulation layer 303 and a line connecting the first vertex D1 to the second vertex D2, which can be conducive to the sliding down of rain, snow, or sand and dust, thus avoiding the accumulation of rain, snow, or sand and dust on the surface of the laminate 301 and blocking the cell 302.

In some embodiments, in the direction perpendicular to the surface of the first limiting portion 210, the second limiting portion 220 has a width of 6 mm to 12 mm, for example, 6mm, 7mm, 8mm, 9mm, 10mm, 11mm, or 12mm.

In one example, in the direction perpendicular to the surface of the first limiting portion 210, the width of the second limiting portion 220 is 11 mm. In the direction along a surface perpendicular to the surface of the first encapsulation layer 303, the height (i.e., the first distance L1) of the first vertex D1 of the second limiting portion 220 adjacent to the first limiting portion 210 with respect to the top surface of the first encapsulation layer 303 is 2.8 mm, and in this case, the included angle γ between the surface of the first encapsulation layer 303 and the line connecting the first vertex D1 to the second vertex D2 is 14°. An included angle φ between the surface of the first encapsulation layer 303 and the shortest line connecting the first vertex D1 to an orthographic projection of an edge of the cell 302 on the surface of the first encapsulation layer 303 is 7.9°.

In response to the preset included angle θ being greater than 7.9°, the accumulation of rain, snow, or sand and dust on the surface of the cell 302 can be avoided; and in response to the preset included angle θ being greater than 14°, the accumulation of rain, snow, or sand and dust on the top surface of the frame 501 can be reduced, thereby avoiding the rain, snow, or sand and dust accumulating too much on the surface of the laminate 301 and blocking the cell 302.

In some embodiments, the cell 302 may be any of a passivated emitter and rear cell (PERC), a passivated emitter and rear totally-diffused (PERT) cell, a tunnel oxide passivated contact (TOPCon) cell, a heterojunction technology (HIT/HJT) cell, or a back contact (BC) cell. In some embodiments, the cell 302 may be a monocrystalline silicon solar cell, a polycrystalline silicon solar cell, an amorphous silicon solar cell, or a polycompound solar cell. The polycompound solar cell may be a cadmium sulfide solar cell, a gallium arsenide solar cell, a copper indium selenide solar cell, or a perovskite solar cell.

In some embodiments, the first encapsulation layer may include a first adhesive film and a first cover plate. The first adhesive film is located on the surface of the cell, and the first cover plate is located on a surface of the first adhesive film away from the cell. The second encapsulation layer may include a second adhesive film and a second cover plate. The second adhesive film is located on the surface of the cell, and the second cover plate is located on a surface of the second adhesive film away from the cell.

Each of the first adhesive film and the second adhesive film may be an organic encapsulation film such as an ethylene vinyl acetate (EVA) adhesive film, a polyethylene octene coelastomer (POE) adhesive film, or a polyvinyl butyral (PVB) adhesive film.

Each of the first cover plate and the second cover plate may be a cover plate with a light transmittance function, such as a glass cover plate or a plastic cover plate. In some embodiments, a surface of the cover plate facing or away from the cell may be a concave-convex surface, so as to increase the utilization rate of the incident light.

It is to be understood that a portion of the first encapsulation layer 303 not in contact with the cell 302 and a portion of the second encapsulation layer 304 not in contact with the cell 302 are in direct contact with each other, and mutually fused so that there is no obvious boundary between the first encapsulation layer 303 and the second encapsulation layer 304.

In the photovoltaic module 300 according to the embodiments of the present disclosure, when the photovoltaic module 300 as a whole is inclined at the predetermined included angle θ with respect to the horizontal plane H, the surface of the laminate 301 is also at the predetermined included angle θ with respect to the horizontal plane H. When rain, snow, or sand and dust falls on the surface of the laminate 301, due to the existence of the included angle, the rain, snow, or sand and dust will slide down to the bottom of the photovoltaic module 300, i.e., the first edge 311 of the laminate 301 closer to the horizontal plane H. Since the top surface of the frame 501 is provided with the curved surface 230, the rain, snow, or sand and dust will slide downwardly beyond the surface of the photovoltaic module 300, thereby avoiding the accumulation of rain, snow, or sand and dust on the surface of the photovoltaic module 300, so as to improve the service life of the photovoltaic module 300.

A person of ordinary skill in the art shall understand that the above embodiments are merely specific and exemplary embodiments for practicing the present disclosure, and in practice, various modifications may be made to these embodiments in terms of formality and detail, without departing from the scope of the present disclosure. Various variations and modifications may be made by one skilled in the art without departing from the scope of the present disclosure. Accordingly, the protection scope of the present disclosure is subject to the appended claims.

## Claims

1. The photovoltaic frame, comprising:
a carrying portion (100), a top of the carrying portion (100) being configured to place a laminate;
a first limiting portion (210), disposed on the carrying portion (100), wherein a bottom of the first limiting portion (210) is connected to the carrying portion (100); and
a second limiting portion (220), disposed above the carrying portion (100), wherein one end of the second limiting portion (220) is connected to a top of the first limiting portion (210), a top surface of the second limiting portion (220) includes a curved surface (230) recessed toward the carrying portion (100), the curved surface (230) includes a first end point (A) on a side of the curved surface (230) adjacent to the first limiting portion (210) and a second end point (B) on a side of the curved surface (230) away from the first limiting portion (210), a tangent line of the first end point (A) at the curved surface (230) is at a first included angle (α) to a plane where a top surface of the carrying portion (100) is located, a tangent line of the second end point (B) at the curved surface (230) is at a second included angle (β) to the plane where the top surface of the carrying portion (100) is located, and the first included angle (α) is greater than the second included angle (β).

2. The photovoltaic frame according to claim 1, wherein the first included angle (α) is 30° to 90°, and the second included angle (β) is 0° to 30°.

3. The photovoltaic frame according to any one of claims 1 or 2, wherein the top surface of the second limiting portion (220) further includes a corrugated surface (240) disposed on a side of the curved surface (230) adjacent to the first limiting portion (210).

4. The photovoltaic frame according to any one of claims 1 to 3, wherein a difference between the first included angle (α) and the second included angle (β) is 40° to 90°.

5. The photovoltaic frame according to any one of claims 1 to 4 wherein the first included angle (α) is 60° to 90°, and the second included angle (β) is 0° to 20°.

6. The photovoltaic frame according to any one of claims 1 to 5, wherein the carrying portion (100) includes a first side portion (101), a bottom portion (104), a second side portion (102), and a top portion (103) sequentially connected, and the first side portion (101), the bottom portion (104), the second side portion (102), and the top portion (103) encloses a corner connector cavity configured to accommodate a corner connector to connect two adjacent photovoltaic frames.

7. The photovoltaic frame according to claim 6, wherein a width of the bottom portion (104) is larger than a width of the top portion (103) in a direction perpendicular to a surface of the first side portion (101).

8. The photovoltaic frame according to any one of claims 6 or 7, wherein a width of the top portion (103) is greater than a distance between the first side portion (101) and the second side portion (102) in a direction perpendicular to a surface of the first side portion (101).

9. The photovoltaic frame according to any one of claims 6 to 8, wherein in a direction perpendicular to a surface of the first limiting portion (210), a width of the second limiting portion (220) is greater than or equal to 1/2 of a width of the top of the carrying portion (100) and less than or equal to the width of the top of the carrying portion (100).

10. The photovoltaic frame according to any one of claims 1 to 8, wherein a surface of the second limiting portion (220) facing the carrying portion (100) is provided with an overflow groove configured to accommodate a part of silicone gel filled between a photovoltaic frame and the laminate.

11. A photovoltaic module, comprising:
a laminate (301), including two opposing first edges (311) and two opposing second edges (321), wherein each of the two opposing first edges (311) is parallel to a horizontal plane (H), and each of the two opposing second edges (321) is at a predetermined included angle (θ) to the horizontal plane (H); and
a frame (501), the frame (501)being the photovoltaic frame (501) according to any one of claims 1 to 5 and located on one of the two opposing first edges (311) closer to the horizontal plane (H).

12. The photovoltaic module according to claim 11, wherein the predetermined included angle (θ) is greater than or equal to the first included angle (α).

13. The photovoltaic module according to any one of claims 11 or 12, wherein:
the laminate (301) includes cells (302), a first encapsulation layer (303) disposed on a top surface of each of the cells (302), and a second encapsulation layer (304) disposed on a bottom surface of each of the cells (302), an area of each of the first encapsulation layer (303) and the second encapsulation layer (304) is larger than an area of the cells (302), and the first encapsulation layer (303) and the second encapsulation layer (304) are disposed between the first limiting portion (210) and the carrying portion (100); and
in a direction perpendicular to a surface of the first encapsulation layer (303), a top surface of an end of the second limiting portion (220) adjacent to the first limiting portion (210) has a first vertex (D1) furthest away from the surface of the first encapsulation layer (303), a top surface of an end of the second limiting portion (220) away from the first limiting portion (210) has a second vertex (D2) furthest away from the surface of the first encapsulation layer (303), and a ratio of a first distance between the first vertex (D1) and a top surface of the laminate (301) to a second distance between the second vertex (D2) and the top surface of the laminate (301) is 3 to 3.5.

14. The photovoltaic module according to claim 13 wherein the first distance is less than or equal to 4 mm, and the second distance is less than or equal to 1.2 mm.

15. The photovoltaic module according to any one of claims 13 to 14, wherein the predetermined included angle (θ) is greater than or equal to an included angle between the surface of the first encapsulation layer (303) and a line connecting the first vertex (D1) to the second vertex (D2).
